# NEUE EUROPÄISCHE PATENTSCHRIFT

(11) **EP 0 386 006 B2**
(45) Veröffentlichungstag und Bekanntmachung des Hinweises auf die Entscheidung über den Einspruch: **12.07.1995**
(45) Hinweis auf die Patenterteilung: 17.06.1992
(21) Anmeldenummer: 88907117.1
(22) Anmeldetag: 20.08.1988
(51) Int. Cl.: G01N 27/419

(54) **SENSORELEMENT FÜR GRENZSTROMSENSOREN ZUR BESTIMMUNG DES LAMBDA WERTES VON GASGEMISCHEN**
SENSOR ELEMENT FOR LIMIT SENSORS FOR DETERMINING THE LAMBDA VALUE OF GASEOUS MIXTURES
ELEMENT CAPTEUR POUR CAPTEURS A COURANT LIMITE DE DETERMINATION DE LA VALEUR LAMBDA DE MELANGES GAZEUX

(30) Priorität: 27.08.1987 DE 3728618
(43) Veröffentlichungstag der Anmeldung: 12.09.1990
(73) Patentinhaber: ROBERT BOSCH GMBH, 70442 Stuttgart (DE)
(72) Erfinder: FRIESE, Karl-Hermann, D-7250 Leonberg (DE); GRÜNWALD, Werner, D-7016 Gerlingen (DE)
(86) Internationale Anmeldenummer: DE8800512
(87) Internationale Veröffentlichungsnummer: WO8902074

(56) Entgegenhaltungen:
- EP-A- 0 188 900
- EP-A- 0 194 082
- DE-A- 3 632 456
- DE-A- 3 704 817
- DE-B- 3 728 618
- FR-A- 11 530
- US-A- 4 450 065
- US-A- 4 505 807

## Beschreibung

Die Erfindung geht aus von einem Sensorelement für Grenzstromsensoren nach der Gattung des Hauptanspruchs. Bei derartigen Sensorelementen, die nach dem Diffusionsgrenzstromprinzip arbeiten, wird der Diffusionsgrenzstrom bei einer konstanten, an den beiden Elektroden des Sensorelementes anliegenden Spannung gemessen. Dieser Strom ist in einem bei Verbrennungsvorgängen entstehenden Abgas von der Sauerstoffkonzentration solange abhängig, wie die Diffusion des Gases zur Pumpelektrode die Geschwindigkeit der ablaufenden Reaktion bestimmt. Es ist bekannt, derartige, nach dem polarographischen Meßprinzip arbeitende Sensoren in der Weise aufzubauen, daß sowohl Anode als auch Kathode dem zu messenden Gas ausgesetzt sind, wobei die Kathode eine Diffusionsbarriere aufweist um ein Arbeiten im Diffusionsgrenzstrombereich zu erzielen.

Die bekannten Grenzstromsensoren dienen in der Regel zur Bestimmung des λ-Wertes von Gasgemischen, der das Verhältnis "Gesamtsauerstoff/zur vollständigen Verbrennung des Kraftstoffs benötigten Sauerstoff" des in einem Zylinder verbrennenden Luft/Kraftstoffgemisches bezeichnet, wobei die Sensoren den Sauerstoffgehalt des Abgases über eine elektrochemische Potentialänderung ermitteln.

Aufgrund einer vereinfachten und kostengünstigen Herstellungsweise hat sich in der Praxis in den letzten Jahren die Herstellung von in Keramikfolien- und Siebdrucktechnik herstellbaren Sensorelementen durchgesetzt.

In einfacher und rationeller Weise lassen sich planare Sensorelemente ausgehend von plättchen- oder folienförmigen sauerstoffleitenden Festelektrolyten, z. B. aus stabilisiertem Zirkondioxid, herstellen, die beidseitig mit je einer inneren und äußeren Pumpelektrode mit dazugehörigen Leiterbahnen beschichtet werden. Die innere Pumpelektrode befindet sich dabei in vorteilhafter Weise im Randbereich eines Diffusionskanals, durch den das Meßgas zugeführt wird, und der als Gasdiffusionswiderstand dient.

Aus der DE-OS 35 43 759 sowie den EP-A 0 142 993, 0 188 900 und 0 194 082 sind ferner Sensorelemente und Detektoren bekannt, denen gemein ist, daß sie jeweils eine Pumpzelle und eine Sensorzelle aufweisen, die aus plättchen- oder folienförmigen sauerstoffleitenden Festelektrolyten und zwei hierauf angeordneten Elektroden bestehen und einen gemeinsamen Diffusionskanal aufweisen. EP-A- 0194082 offenbart den Stand der Technik gemäß dem Oberbegriff des Anspruchs 1. In EP-A- 0194082 sind jedoch zwei getrennte Elektroden 146 und 147 vorgesehen, die außerhalb des elektrochemischen Elementes elektrisch verbunden sind.

Nachteilig an Sensorelementen nach der Gattung des Hauptanspruchs ist außerdem, daß der vordere, dem zugeführten Meßgas zugewandte Teil der inneren Pumpelektrode stärker als der hintere, dem zugeführten Meßgas abgewandte Teil der Pumpelektrode beansprucht wird. Dies führt zu einer hohen Elektrodenpolarisation, die eine hohe Pumpspannung erfordert. Letztere wiederum birgt die Gefahr einer Elektrolytzersetzung im Bereich der inneren Pumpelektrode in sich.

### Vorteile der Erfindung

Das erfindungsgemäße Sensorelement mit den kennzeichnenden Merkmalen des Hauptanspruches hat demgegenüber den Vorteil, daß die wirksame Pumpelektrodenoberfläche am Elektrodenanfang erhöht wird und somit die Notwendigkeit der Erhöhung der Pumpspannung entfällt. Die flächenmäßige Ausdehnung der Pumpelektrode in die Tiefe des Diffusionskanals kann entsprechend gering bleiben. Die Erfindung ermöglicht somit eine bessere Ausnutzung der zur Ausbildung der Pumpelektroden benötigten Mengen an Edelmetall, beispielsweise Platin. Ferner tritt ein verringerter Abfall des Grenzstroms bei zunehmender Elektrodenalterung im Vergleich zur Anordnung der inneren Pumpelektrode auf nur einer Seite des Diffüsionskanals auf.

Das erfindungsgemäße Sensorelement läßt sich anstelle bekannter Sensorelemente planarer Struktur in Grenzstromsensoren üblicher Bauart verwenden. In Frage kommen dabei Breitbandsensoren (λ ≦ 1) und Magersensoren (λ > 1). Das erfindungsgemäße Sensorelement kann somit allein als Pumpzelle, gegebenenfalls mit einem Heizelement, ausgebildet sein, z. B. als Magersensor für Dieselmotoren, und als solches in ein übliches Sensorgehäuse, z. B. des aus den DE-OS 32 06 903 und 35 37 051 bekannten Typs eingebaut und zur Messung des Kraftstoff-Luft-Verhältnisses in einem Abgas verwendet werden. Das erfindungs gemäße Sensorelement kann jedoch auch außer der Pumpzelle zusätzlich noch eine Sensorzelle (Nernstzelle) aufweisen, die mit einem zusätzlichen Luftreferenzkanal versehen ist und deren eine Elektrode im Bereich der Pumpelektrode im Diffusionskanal der Pumpzelle angeordnet ist und deren andere Elektrode sich im Luftreferenzkanal befindet.

### Zeichnung

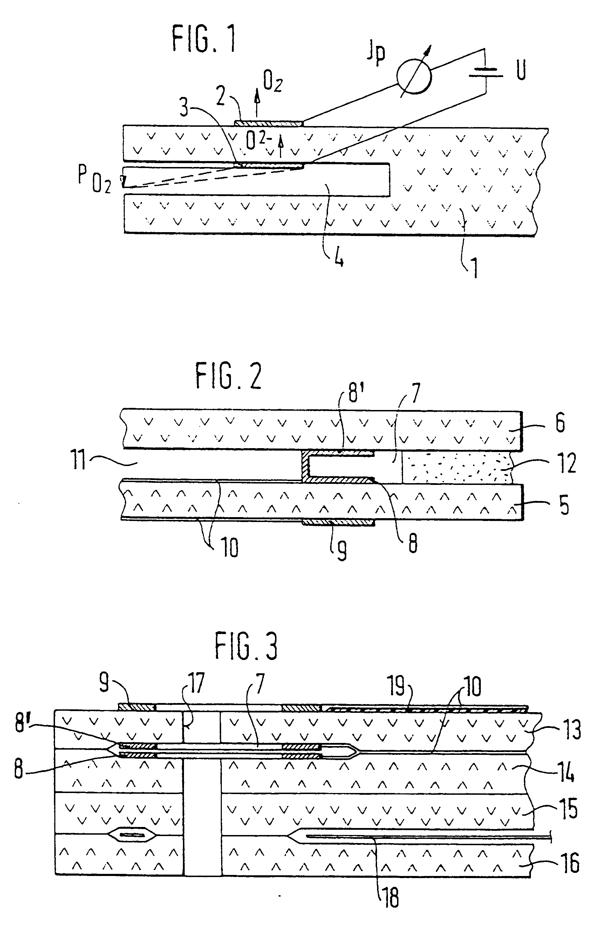

Fig. 1 ist eine schematische Schnittdarstellung des Funktionsprinzips eines Sensorelementes bestehend aus einem plättchenförmigen Festelektrolyten 1 als Träger für die äußere Pumpelektrode 2 und die innere Pumpelektrode 3, die in dem Diffusionskanal 4 angeordnet ist. Die Schemazeichnung läßt die stärkere Beanspruchung der inneren Elektrode 3 an der der Öffnung des Diffusionskanals 4 zugewandten Seite erkennen, da der Sauerstoffpartialdruck über der Elektrodentiefe abfällt und die Stromdichte vom Sauerstoffpartialdruck abhängt.

Fig. 2 ist eine schematische, stark vergrößerte Darstellung eines Schnitts durch ein in Keramikfolien- und Siebdrucktechnik herstellbares Sensorelement nach der Erfindung. Es besteht aus den Keramikfolien 5 und 6, auf die nach dem Siebdruckverfahren die inneren Pumpelektroden 8 und 8′ sowie die äußere Pumpelektrode 9 nebst dazugehörigen Leiterbahnen 10 aufgedruckt worden sind und die unter Ausbildung des einen Tunnel bildenden Diffusionskanals 7 mittels eines üblichen interlaminaren Binders zusammenlaminiert sind. In dem Diffusionskanal 7 ist in vorteilhafter Weise, wie dargestellt, eine poröse Füllung 12 vorgesehen, die als Diffusionsbarriere für das Meßgas dient.

Fig. 3 ist eine weitere schematische, stark vergrößerte Darstellung eines Schnitts durch eine andere in Keramikfolien- und Siebdrucktechnik herstellbare, vorteilhafte Ausführungsform eines Sensorelementes nach der Erfindung, bei dem die inneren Pumpelektroden 8 und 8′ sowie die äußere Pumpelektrode 9 diesmal ringförmig um die Meßgaszuführung angeordnet sind. Es besteht im wesentlichen aus vier zusammenlaminierten Festelektrolytfolien 13, 14, 15 und 16 mit der ausgestanzten Meßgaszuführöffnung 17, der ringförmigen äußeren Pumpelektrode 9 und den beiden inneren, im Diffusionskanal 7 einander gegenüber angeordneten inneren Pumpelektroden 8 und 8′. Das Sensorelement kann ferner einen Heizer 18 aufweisen. Die Folien 15 und 16 mit dem Heizer sind jedoch nicht zwingend erforderlich. Die ringförmigen, dem Meßgas ausgesetzten Elektroden 8, 8′ und 9 sind an Leiterbahnen 10 angeschlossen, wobei unter der Leiterbahn 10 eine Isolierschicht 19, z. B. eine Al₂O₃-Schicht, angeordnet ist. Die Leiterbahnen sind an eine nicht dargestellte Spannungsquelle angeschlossen, z. B. eine Batterie mit einer konstanten Arbeitsspannung im Bereich von 0,5 bis 1,0 Volt In vorteilhafter Weise sind die äußere Pumpelektrode 9 und die dazugehörige Leiterbahn 10 mit einer porösen Deckschicht, z. B. aus Magnesium-Spinell, abgedeckt.

Zur Herstellung erfindungsgemäßer Sensorelemente geeignete sauerstoffionenleitende Festelektrolyte sind insbesondere solche auf Basis von ZrO₂, HfO₂, CeO₂ und ThO₂. Als besonders vorteilhaft hat sich die Verwendung von Plättchen und Folien aus mit Yttrium stabilisiertem Zirkoniumdioxid (YSZ) erwiesen.

Die Plättchen und Folien haben dabei vorzugsweise eine Dicke von 0,25 bis 0,3 mm.

Die Pumpelektroden bestehen vorzugsweise aus einem Metall der Platingruppe, insbesondere Platin, oder aus Legierungen von Metallen der Platingruppe oder Legierungen von Metallen der Platingruppe mit anderen Metallen. Sie enthalten in vorteilhafter Weise ein keramisches Stützgerüstmaterial, z. B. YSZ-Pulver, mit einem Volumenanteil von vorzugsweise etwa 40 Vol.-%. Sie sind porös und weisen eine Dicke von vorzugsweise 8 bis 15 »m auf. Die zu den Pumpelektroden gehörenden Leiterbahnen bestehen vorzugsweise ebenfalls aus Platin oder einer Platinlegierung des beschriebenen Typs. Pumpelektroden und Leiterbahnen können mittels bekannter Verfahren auf den Festelektrolytträger aufgebracht werden, beispielsweise durch Siebdrucken. Zwi schen der die äußere Pumpelektrode mit einer in der Zeichnung nicht dargestellten Spannungsquelle verbindenden Leiterbahn und dem Festelektrolytträger befindet sich in der Regel eine Isolationsschicht z. B. aus Al₂O₃. Sie kann beispielsweise eine Stärke von etwa 15»m haben. Die Vereinigung der einelnen, das Sensorelement bildenden Folien oder Plättchen kann mittels eines in der Keramikfolien- und Siebdrucktechnik üblichen Verfahrens erfolgen, bei dem die Folien zusammengefügt und auf Temperaturen von etwa 100 °C erhitzt werden. Dabei kann gleichzeitig der Diffusionskanal vorbereitet werden. In vorteilhafter Weise wird dieser in Dickschichttechnik eingebracht, beispielsweise durch eine Theobrominsiebdruckschicht, wobei das Theobromin beim späteren Sinterprozeß verdampft wird. Zur Erzeugung des Diffusionskanals ebenfalls verwendbar sind beispielsweise Thermalrußpulver, die beim Sinterprozeß ausbrennen oder Ammoniumcarbonat, das verdampft.

Soll der Diffusionskanal eine poröse Füllung aufweisen,so kann beispielsweise anstelle einer Theobrominsiebdruckschicht eine Schicht aus Theobromin oder einem anderen verdampf- oder verbrennbaren Material und einem Material, das bei der Sintertemperatur des Festeleltrolytsubstrates noch nicht dicht sintert, z. B. grobkörniges ZrO₂, Mg-Spinell oder Al₂O₃ mit einer Korngröße von z. B. 10»m verwendet werden.

### Beispiel

Zur Herstellung eines Sensorelementes des in Fig. 3 schematisch dargestellten Typs wurden Folien aus mit Yttrium stabilisiertem Zirkoniumdioxid einer Schichtstärke von 0,3 mm verwendet. Das Aufbringen der aus Platin bestehenden Pumpelektroden auf die Trägerfolien erfolgte nach bekannter Siebdrucktechnik, wobei auf die die äußere Pumpelektrode tragende Oberfläche der Trägerfolien im Bereich der Leiterbahn der äußeren Pumpelektrode zuvor eine 20»m dicke Al₂O₃-Isolationsschicht aufgetragen wurde. Die ringförmigen Pumpelektroden hatten einen Außendurchmesser von 2,8 mm und einen Innendurchmesser von 1,4 mm bei einer Dicke von 12»m. Die Leiterbahnen wurden ausgehend von einer üblichen Pt-Cermetpaste aus 85 Gew.-Teilen Pt-pulver und 15 Gew.-Teilen YSZ-pulver erzeugt. Der Diffusionskanal wurde in Dickschichttechnik durch eine Theobromin-Siebdruckschicht eingebracht, wobei das Theobromin beim späteren Sinterprozeß im Temperaturbereich um 300 °C unter Hinterlassen eines etwa 30»m hohen und 1,3 mm tiefen Ringspaltes verdampft wurde. Die zentrale Meßgaszufuhröffnung hatte einen Durchmesser von 0,25 mm. Nach dem Bedrucken der Trägerfolien, d. h. nach aufbringen der Elektroden, Leiterbahnen, Isolierschicht sowie gegebenenfalls Deckschicht auf die äußere Pumpelektrode wurden die Folien nach Zusammenfügen einem Sinterprozeß unterworfen, bei dem sie etwa 3 Stunden lang auf eine Temperatur im Bereich von 1380 °C erhitzt wurden.

Zur Herstellung eines weiteren Sensorelementes mit einem Heizer, wie in Fig. 3 schematisch dargestellt, wurden vor dem Erhitzen weitere Folien mit einem aufgedruckten Heizer zulaminiert.

Die hergestellten Sensorelemente wurden im Sensorgehäuse des aus den DE-OS 32 06 903 und 35 37 051 bekannten Typs eingebaut und zur Messung des Kraftstoff-Luft-Verhältnisses in Abgasen verwendet.

## Patentansprüche

1. Sensorelement für Grenzstromsensoren zur Bestimmung des Lambda-Wertes von mageren Abgasen von Verbrennungsmotoren, bestehend aus einer einzigen Pumpzelle, mit auf einem O²⁻-ionenleitenden plättchen- oder folienförmigen Festelektrolyten angeordneten äußeren und inneren Pumpelektroden, von denen die innere Elektrode auf dem plättchen- oder folienförmigen Festelektrolyten in einem Diffusionskanal für das Meßgas angeordnet ist, sowie mit Leiterbahnen für die Pumpelektroden, dadurch gekennzeichnet, daß die Fläche der inneren Pumpelektroden erweitert ist durch Aufbringen von zwei sich im Diffusionskanal (7) gegenüberliegenden Teilen (8, 8′), welche innerhalb des Sensorelements direkt miteinander verbunden sind.

2. Sensorelement nach Anspruch 1, dadurch gekennzeichnet, daß die beiden Teile (8, 8′) der inneren Pumpelektrode auf verschiedenen, durch einen Laminierungsprozeß zusammengefügten plättchen- oder folienförmigen Festelektrolyten (5, 5; 13, 14) angeordnet sind.

3. Sensorelement nach Anspruch 1 oder 2, dadurch gekennzeichnet, daß zwischen der Leiterbahn (10) und den plättchenförmigen oder folienförmigen Festelektrolyten (13) eine Isolierschicht (19) angeordnet ist.

4. Sensorelement nach einem der Ansprüche 1 bis 3, dadurch gekennzeichnet, daß es einen Heizer (18) aufweist, der zwischen zwei weiteren durch einen Laminierungsprozeß zusammengefügten plättchen- oder folienförmigen Festelektrolyten (15, 16) enthalten ist.

5. Sensorelement nach einem der Ansprüche 1 bis 4, dadurch gekennzeichnet, daß der Sensor in Keramikfolien- und Siebdrucktechnik hergestellt ist.

6. Sensorelement nach einem der Ansprüche 1 bis 5, dadurch gekennzeichnet, daß über der äußeren Pumpelektrode (9) und der dazugehörigen Leiterbahn (10) eine poröse Deckschicht angeordnet ist.

7. Sensorelement nach einem der Ansprüche 1 bis 6, dadurch gekennzeichnet, daß die beiden Teile der inneren Pumpelektrode (8, 8′) und die äußere Pumpelektrode (9) ringförmig um die Meßgaszuführung (17) angeordnet sind.

8. Sensorelement nach einem der Ansprüche 1 bis 7, dadurch gekennzeichnet, daß der Diffusionskanal (7) eine als Diffusionsbarriere wirksame Füllung enthält.

## Claims

1. Sensor element for limiting current sensors for determining the lambda value of lean exhaust gases of internal combustion engines, comprising a single pump cell, which has outer and inner pump electrodes which are disposed on a laminar-type or foil-type solid electrolyte which conducts O²⁻ ions and whose inner electrode is disposed on the laminar or film-type solid electrolyte in a diffusion channel for the gas under test, and which has conductor tracks for the pump electrodes, characterized in that the surface of the inner pump electrode is extended by applying two parts (8, 8′) which are located opposite one another in the diffusion channel (7) and are directly connected to one another within the sensor element.

2. Sensor element according to Claim 1, characterized in that the two parts (8, 8′) of the inner pump electrode are disposed on different laminar or film-type solid electrolytes (5, 5; 13, 14) assembled by a laminating process.

3. Sensor element according to Claim 1 or 2, characterized in that between the conductor track (10) and the laminar-type or film-type solid electrolytes (13) an insulating layer (19) is disposed.

4. Sensor element according to one of the Claims 1 to 3, characterized in that it has a heater (18) which is contained between two further laminar or film-type solid electrolytes (15, 16) assembled by a lamination process.

5. Sensor element according to one of the Claims 1 to 4, characterized in that the sensor is manufactured by ceramic-film and screen-printing technology.

6. Sensor element according to one of the Claims 1 to 5, characterized in that a porous covering layer is disposed above the outer pump electrode (9) and the associated conductor track (10).

7. Sensor element according to one of the Claims 1 to 6, characterized in that the two parts of the inner pump electrode (8, 8′) and the outer pump electrode (9) are disposed annularly around the inlet (17) for the gas under test.

8. Sensor element according to one of the Claims 1 to 7 characterized in that the diffusion channel (7) contains a filling which acts as diffusion barrier.

## Revendications

1. Elément capteur pour des capteurs à courant limite permettant de déterminer la valeur lambda de gaz d'échappement pauvres de moteurs à combustion interne comprenant une seule cellule de pompage, avec des électrodes de pompage externes et internes disposées sur des électrolytes solides en forme de plaquettes ou de feuilles, conduisant les ions oxygène O²⁻, l'électrode interne étant disposée sur l'électrolyte solide en forme de plaquette ou de feuille dans un canal de diffusion pour le gaz de mesure, ainsi qu'avec des pistes conductrices pour les électrodes de pompage, élément capteur caractérisé en ce que la surface de l'électrode de pompage interne est élargie par adjonction de deux parties (8, 8′) placées en face l'une de l'autre dans le canal de diffusion (7) et qui sont directement reliées ensemble à l'intérieur de l'élément capteur.

2. Elément capteur selon la revendication 1, caractérisé en ce que les deux parties (8, 8′) de l'électrode de pompage interne, sont disposées sur des électrolytes solides différents (5, 6 ; 13, 14) en forme de plaquettes ou de feuilles, assemblées par un processus de laminage.

3. Elément capteur selon la revendication 1 ou la revendication 2, caractérisé en ce qu'entre la piste conductrice (10) et l'électrolyte solide (13) en forme de plaquettes ou de feuilles, est disposée une couche isolante (19).

4. Elément capteur selon une des revendications 1 à 3, caractérisé en ce qu'il comporte un élément chauffant (18) qui est compris entre deux autres électrolytes solides (15, 16) en forme de plaquettes ou de feuilles, assemblées par un processus de laminage.

5. Elément capteur selon une des revendications 1 à 4, caractérisé en ce que le capteur est fabriqué en feuilles de céramique et par la technique d'impression sérigraphique.

6. Elément capteur selon une des revendications 1 à 5, caractérisé en ce qu'une couche poreuse est disposée par dessus une électrode externe de pompage (9) et la piste conductrice (10) qui lui est associée.

7. Elément capteur selon une des revendications 1 à 6, caractérisé en ce que les deux parties (8, 8′) de l'électrode interne de pompage et l'électrode externe de pompage (9) sont disposées sous une forme annulaire autour de l'arrivée (17) du gaz à mesurer.

8. Elément capteur selon une des revendications 1 à 7, caractérisé en ce que le canal de diffusion (7) comprend un remplissage intervenant en tant que barrière de diffusion.
